# EUROPÄISCHE PATENTSCHRIFT

(11) **EP 1 074 325 B1**
(45) Veröffentlichungstag und Bekanntmachung des Hinweises auf die Patenterteilung: **15.10.2003**
(21) Anmeldenummer: 00115541.5
(22) Anmeldetag: 19.07.2000
(51) Int. Cl.: B23D 35/00

(54) **Verfahren und Vorrichtung zum Wechseln eines Werkzeugsatzes**
Method and apparatus for changing sets of cutters
Procédé et appareil pour changer des groupes de couteaux

(30) Priorität: 06.08.1999 DE 19937207
(43) Veröffentlichungstag der Anmeldung: 07.02.2001
(73) Patentinhaber: CO Stahl und Technik GmbH, 26506 Norden (DE)
(72) Erfinder: Dr.-Ing Yiying Cai, D-26506 Norden (DE)
(74) Vertreter: Siekmann, Gunnar, Dipl.-Phys.

(56) Entgegenhaltungen:
- EP-A- 0 911 104
- WO-A-96/09145

## Beschreibung

Die Erfindung betrifft ein Verfahren zum Wechseln eines Werkzeugsatzes bei einer Längsteilanlage, bei dem der Werkzeugsatz von einer Welle entfernt und ein vorbereiteter neuer Werkzeugsatz auf die Welle aufgeschoben wird, wobei die einzelnen Werkzeuge, aus denen der Werkzeugsatz zusammengestellt wird, senkrecht gelagert werden und eine im wesentlichen waagerecht arbeitende Aufnahmeeinrichtung die senkrecht gelagerten Werkzeuge zu einem Achsenelement transportiert. Weiterhin betrifft die Erfindung eine Vorrichtung zum Wechseln eines Werkzeugsatzes mit den Merkmalen des Oberbegriffes des Patentanspruches 7.

Derartige Längsteilanlagen, insbesondere Spaltanlagen, werden benötigt, um Bandstahl oder andere Materialien in der Längsrichtung auf definierte Streifenbreiten zu zerteilen. Dazu wird eine Rolle Bandstahl abgewickelt, zerteilt und wieder aufgewickelt. Das Zerteilen erfolgt auf einer sogenannten Spaltschere, bei der auf zwei gegenläufig zueinander laufenden Wellen Distanzstücke und Messer angeordnet sind. Die Anordnung der Distanzstücke und Messer muß für jeden neuen Zerteilauftrag geändert werden. Typischerweise werden für einen Schneid- oder Zerteilvorgang 66 bis 100 Werkzeuge benötigt, die ein Gesamtgewicht von etwa 400 bis 800 kg aufweisen. Bisher erfolgt die Bestückung der Wellen mit Distanzstücken und Messern überwiegend manuell.

Bei einer aus der WO 96/09145 A bekannten automatischen Vorrichtung zum Wechseln eines derartigen Werkzeugsatzes werden die Werkzeuge flach auf dem Boden liegend, also horizontal, gelagert und von oben mit einem Arm aufgenommen und auf die Wellen aufgebracht. Dabei sind besonders angepaßte Distanzstücke und Messer erforderlich, die von der Vorrichtung aufgenommen werden können.

Ein Verfahren und eine Vorrichtung der eingangs genannten Art sind aus der EP 0 911 104 A1 bekannt. Bei dem dort beschriebenen Verfahren werden die Werkzeuge an zwei sich gegenüberliegenden Wänden auf Vorsprüngen gelagert, wobei die Vorsprünge sich horizontal erstrecken, so daß die einzelnen scheibenförmigen Werkzeuge jeweils senkrecht angeordnet sind und auf die Vorsprünge aufgeschoben sind. Auf einem Vorsprung sind jeweils mehrere Werkzeuge in horizontaler Weise nebeneinander angeordnet. Die so gelagerten Werkzeuge werden von Schiebeeinrichtungen, die an jedem Vorsprung angeordnet sind, auf eine Aufnahmeeinrichtung geschoben, die die Werkzeuge zu einem Übergabeort transportiert.

Aus der DE 197 40 008 C1 ist eine weitere Vorrichtung und ein Verfahren zum Wechseln von Werkzeugsätzen bekannt, die für eine Vorrichtung zum Längsspalten von Metallband verwendet werden. Bei dieser Vorrichtung ist eine Messerwechselvorrichtung vorgesehen, die eine Mehrzahl von Wellen aufweist, die derart bewegbar sind, daß sie in fluchtende Ausrichtung mit den eigentlichen Messerwellen der Längsspaltanlage gebracht werden können und daß dann die auf den Wellen vorgebauten Werkzeugsätze oder Messersätze auf die eigentliche Messerwelle aufgeschoben werden können. Wie diese Messersätze auf den Wellen vorgebaut werden können, ist in dieser Druckschrift nicht offenbart.

Der Erfindung liegt die Aufgabe zugrunde, ein Verfahren und eine Vorrichtung der eingangs genannten Art zu schaffen, mit denen auf eine besonders einfache und schnelle Weise ein Werkzeugwechsel bei Spaltanlagen durchgeführt werden kann.

Die Lösung dieser Aufgabe erfolgt verfahrensmäßig mit den Merkmalen des Patentanspruchs 1. Vorrichtungsmäßig wird die Aufgabe mit den Merkmalen des Patentanspruchs 7 gelöst. Vorteilhafte Weiterbildungen der Erfindung sind in den Unteransprüchen angegeben.

Nach dem Grundgedanken der Erfindung werden die einzelnen Werkzeuge, aus denen der Werkzeugsatz zusammengestellt wird, senkrecht gelagert und ein waagerecht arbeitender Greifer nimmt die senkrecht gelagerten Werkzeuge auf und gibt diese dann auf ein Achsenelement. Dabei ist das Wort "senkrecht" so zu verstehen, daß die einzelnen scheibenförmigen Werkzeuge jeweils senkrecht gelagert werden, das heißt, daß beispielsweise bei den Schneidwerkzeugen die scharfen Schneidkanten auch noch oben und unten ausgerichtet sind. Werden mehrere Werkzeuge eng aneinanderliegend gelagert, so erstrecken sich mehrere nebeneinander angeordnete Werkzeuge in horizontaler Richtung. Nach Bestückung des Achsenelements wird der Werkzeugsatz auf die Wellen aufgeschoben. Das hier und im folgende beschriebene Achsenelement ist bevorzugt Teil eines Drehkreuzes mit mehreren Achsenelementen. Jedes Achsenelement ist zweiteilig ausgebildet, so daß es mit den zwei übereinander angeordneten Wellen der Spaltschere in fluchtende Ausrichtung gebracht werden kann. Die Achsenelemente können auch als Wellen ausgebildet sein. Bei diesem Verfahren, bei dem die Werkzeuge senkrecht hängend oder stehend gelagert werden, so daß ein horizontal arbeitender Greifer auf die scheibenartigen Werkzeuge mit ihrer zentralen Ausnehmung für die Welle der Längsteilanlage zugreifen kann, ist besonders günstig, da übliche Werkzeuge und Distanzstücke verwendet werden können und keine Sonderanfertigungen zur Durchführung des Verfahrens benötigt werden. Durch die erfindungsgemäße Lagerung und den Zugriff auf die Werkzeuge können vollautomatisch neue Werkzeugsätze in einer überaus kurzen Zeit zusammengestellt werden. Ein weiterer Vorteil besteht darin, daß durch den aktiv arbeitenden Greifer das Lager passiv ausgebildet werden kann, das heißt, daß auf den Einsatz von einer Vielzahl von Übergabeeinrichtungen in dem Lager verzichtet werden kann. Lediglich der Greifer, der auf sämtliche Positionen des Lagers zugreifen kann, weist die zur Übergabe der Werkzeuge notwendige Mechanik und bewegliche Komponenten auf.

Bevorzugt werden die Werkzeuge einzeln vom Greifer aufgenommen und dann einzeln auf das Achsenelement weitergegeben. Dieser Vorgang wird so oft wiederholt, bis ein Werkzeugsatz zusammengestellt ist. Dieser Werkzeugsatz wird dann komplett vom Achsenelement auf die Welle der Längsspaltanlage aufgeschoben. Alternativ ist es auch möglich, daß der Greifer jeweils ein Werkzeug aufnimmt und dieses auf dem Greifer zwischenlagert, bis dort eine gewisse Anzahl, beispielsweise fünf, sechs oder mehr Werkzeuge gelagert sind, die dann gemeinsam auf das Achsenelement gegeben werden. Je nach Anwendungsfall kann eine dieser beiden Vorgehensweisen besonders zeitgünstig sein.

Die Werkzeuge sind bevorzugt hängend an der Wand gelagert, wobei hierzu an der Wand Dorne vorgesehen sind, auf denen die Werkzeuge angeordnet sind. Die Dorne sind in ihrem Durchmesser wesentlich kleiner als die Werkzeuge. Besonders bevorzugt ist es, die Werkzeuge matrixartig zu lagern, wobei insbesondere zwei gegenüberliegende Wände verwendet werden, an denen die Werkzeuge jeweils matrixartig angeordnet werden. Die gegenüberliegenden Wände können durch eine Verbindungswand ergänzt werden, so daß ein U-förmiges Lager gebildet wird, wobei an der offenen Seite das Achsenelement bestückt wird.

In einer Weiterbildung der Erfindung werden die Schneidwerkzeuge in einem bestimmten Abschnitt des Lagers, einer Kontrollschleuse, gelagert. Diese Kontrollschleuse, in dem die Schneidwerkzeuge gelagert werden, kann bewegt und einer Schneidwerkzeugkontrolle zugeführt werden. Damit ist es möglich, insbesondere durch einen Austausch oder eine Drehung der Kontrollschleuse mit den Schneidwerkzeugen für jede neue Zusammenstellung eines Werkzeugsatzes kontrollierte und gegebenenfalls nachgeschliffene Schneidwerkzeuge bereitzustellen. Dies dient ebenso zur Beschleunigung des erfindungsgemäßen Verfahrens, wie die Lagerung der Werkzeuge in einer Art Matrix, so daß ein besonders schneller und sicherer Zugriff auf die Werkzeuge und insbesondere die Distanzstücke möglich ist.

Die erfindungsgemäße Vorrichtung zeichnet sich dadurch aus, daß die Aufnahmeeinrichtung als automatisch arbeitender Greifer ausgebildet ist, der zum horizontalen Zugriff auf die Werkzeuge und zur Weitergabe der Werkzeuge ausgelegt ist. Mit dieser Vorrichtung ist eine besonders schnelle Handhabung der Werkzeuge, insbesondere der Distanzstücke und der Schneidwerkzeuge, möglich.

Das Lager ist bevorzugt so aufgebaut, daß im wesentlichen zwei sich gegenüberstehende Wände vorgesehen sind, so daß an den Wänden des Lagers in matrixartiger Weise die Werkzeuge angeordnet werden können. Diese werden bevorzugt an Stäben oder Dorne aufgehängt, so daß durch die matrixartige Anordnung der Dorne die Lagerung der scheibenförmigen Werkzeuge genau definiert ist. Alternativ können die Werkzeuge auch stehend auf Podesten oder mittels anderer Halteeinrichtungen bereitgestellt werden. Der Abstand der sich gegenüberstehenden Wände ist gerade so groß, daß beide Wände durch den Greifer schnell erreicht werden können und zwischen den Wänden ein ausreichender Abstand zum Hantieren verbleibt.

In einer Weiterbildung der Erfindung ist ein bestimmter Abschnitt des Lagers zur Aufnahme der Schneidwerkzeuge vorgesehen und als Kontrollschleuse ausgebildet, die günstigerweise beweglich und insbesondere verschiebbar und drehbar gelagert ist. Dadurch ist es möglich, die Schneidwerkzeuge aus dem Lager herauszufahren und einer Kontrolle und Nachbesserung und gegebenenfalls einem Austausch zuzuführen. Durch das rasche Nachführen eines neuen Abschnitts mit überholten oder ersetzten Schneidwerkzeugen kann das Wechselverfahren kontinuierlich betrieben werden. Insbesondere ist es günstig, an der Kontrollschleuse, die zur Aufnahme der Schneidwerkzeuge vorgesehen ist, an der Vorder- und Rückseite Dorne anzuordnen und an beiden Seiten Schneidwerkzeuge zu lagern. Die drehbare Kontrollschleuse mit den Schneidwerkzeugen kann dann nach Rückbau eines benutzten Werkzeugsatzes gedreht werden, so daß für die Zusammenstellung eines neuen Werkzeugsatzes überholte Schneidwerkzeuge zur Verfügung stehen, während die vorher benutzten Schneidwerkzeuge auf der Rückseite der Lagerwand positioniert sind und dort geprüft und gegebenenfalls nachgebessert werden können.

Der Greifer ist in einer bevorzugten Ausführungsform so ausgebildet, daß er in drei Dimensionen verfahrbar ist und zudem um seine vertikale Achse drehbar ist. Dadurch kann der Greifer jeden Punkt der Lagerwände anfahren und vor- und zurücksetzen, um Werkzeuge von der Wand abzunehmen. Durch eine Drehung des Greifers um seine vertikale Achse um 90° ist ein Positionswechsel zwischen der Wand, an der die Werkzeuge hängen, und einem Achsenelement, auf dem der Werkzeugsatz zusammengestellt wird, möglich. Der Greifer ist in einer bevorzugten Ausführungsform hängend befestigt, wobei im oberen Bereich ein Drehgelenk vorgesehen ist. Dabei ist der Greifer bevorzugt mit einem mechanischen Innengreifer mit spreizbaren Fingern ausgerüstet, wobei günstigerweise drei Finger vorgesehen sind, die pneumatisch spreiz- und entspreizbar sind. Es sind auch andere Arten und Typen von Greifern denkbar. Besonders günstig ist jedoch ein derartiger Innengreifer, da die Werkzeuge im Innenbereich den gleichen Durchmesser aufweisen. Zusätzlich kann der Greifer einen Vakuumsauger aufweisen, der eine ringförmige Dichtung zur Nutzung der Saugfläche und einen Hochleistungsejektor zur Vakuumerzeugung aufweist. Zusätzlich sind in dem Greifer Sensoren zur Erkennung der Werkzeuge und zur Überwachung und Erkennung eines ausreichenden Vakuums, das stark genug ist, ein Werkzeug zu halten, eingebaut.

In einer besonders bevorzugten Weiterbildung der Erfindung ist der Greifer als Doppelgreifer ausgebildet. Das bedeutet, daß der Greifer in seinem horizontalen Bereich an jedem Ende einen Greifer aufweist, wobei zunächst ein Greifer ein Werkzeug von einer Wand entnimmt und der andere Greifer dann unmittelbar darauf ein weiteres Werkzeug von der gegenüberliegenden Wand entnimmt. Diese Werkzeuge werden dann auf das Achsenelement gegeben. Dadurch können pro Zeittakt zwei Werkzeuge in das Lager gegeben oder vom Lager entnommen werden, so daß die zum Wechseln eines Werkzeugsatzes benötigte Zeitdauer weiter verkürzt wird.

In einer anderen Weiterbildung der Erfindung weist der Greifer einen Pusher auf, mit dem die vom Greifer aufgenommenen Werkzeuge abgeschoben werden. Diese können auf das Achsenelement abgeschoben werden, auf dem die Werkzeuge zu einem vollständigen Werkzeugsatz zusammengestellt werden und von dem aus der vollständige Werkzeugsatz auf die Welle der Spaltschere geschoben wird. Bevorzugt ist das Achsenelement als Drehkreuz ausgebildet, so daß drei, günstigerweise vier, oder noch mehr Achsenelemente zur Verfügung stehen, die bestückt werden können, während die Spaltanlage im Einsatz ist.

In einer bevorzugten Weiterbildung der Erfindung ist der Pusher als verfahrbarer Kombipusher ausgebildet, der einerseits die Werkzeuge auf dem Drehkreuz zusammen- und verschieben und andererseits den vollständigen Werkzeugsatz vom Drehkreuz auf die Welle der Spaltschere schieben kann und umgekehrt die benutzten Werkzeugsätze von der Welle der Spaltschere auf das Drehkreuz schieben kann.

Nachfolgend wird die Erfindung anhand der Zeichnungen weiter erläutert. Im einzelnen zeigen die schematischen Darstellungen in:
- Fig. 1: eine Gesamtansicht einer Längsspaltanlage mit einer Vorrichtung zum Wechseln eines Werkzeugsatzes;
- Fig. 2: einen Querschnitt durch eine Vorrichtung mit einem Doppelgreifer;
- Fig. 3: eine Seitenansicht eines Doppelgreifers zum Einsatz in der Vorrichtung;
- Fig. 4: einen Greifer der Vorrichtung zum Wechseln des Werkzeugsatzes;
- Fig. 5: eine Kontrollschleuse der Vorrichtung;
- Fig. 6: einen Kombipusher der Vorrichtung und
- Fig. 7: einen Endring zur Verwendung mit der Vorrichtung.

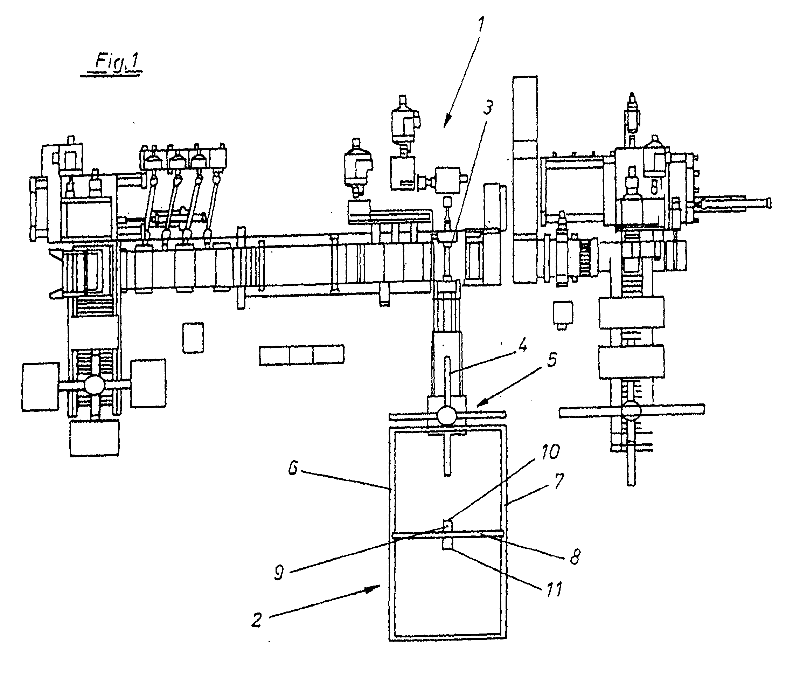

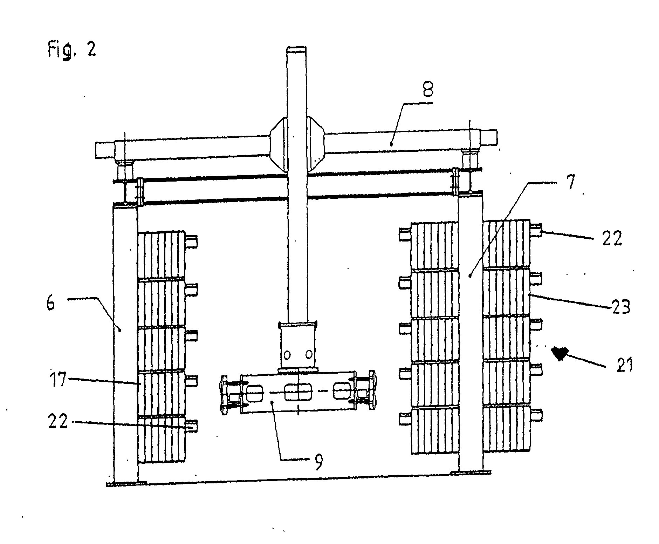

In Fig. 1 ist eine mit 1 bezeichnete Spaltanlage oder Längsteilanlage dargestellt, die dazu dient, Bandstahl, der zunächst in Rollen vorliegt, abzuwickeln und auf exakt definierte Streifenbreite zu zerteilen und anschließend wieder aufzuwickeln. Das Zerteilen erfolgt auf einer sogenannten Spaltschere, die aus zwei gegenläufig zueinander rotierenden Wellen aufgebaut ist, auf der in exakten Abständen Distanzstücke und Schneidwerkzeuge oder Messer angeordnet sind. Die typische Breite einer derartigen Spaltschere beträgt bis zu 2200 mm. Insgesamt werden auf den beiden Wellen der Spaltschere, die übereinander angeordnet sind und mit 3 bezeichnet sind, ca. 66 bis 100 Werkzeuge benötigt, deren Gesamtgewicht etwa 400 bis 800 kg beträgt. Nach dem erfolgten Durchlauf einer Rolle Bandstahls wird die Spaltanlage zum Werkzeugwechsel gestoppt, wobei die Spaltschere öffnet und der benutzte Werkzeugsatz auf ein Achsenelement 4 eines Drehkreuzes 5 geschoben wird. Das Drehkreuz 5 mit den verschiedenen Achsenelementen ist das Bindeglied zu der Vorrichtung 2 zum Wechseln des Werkzeugsatzes, die auch als Messerbauroboter bezeichnet werden kann. Die Vorrichtung 2 weißt im wesentlichen ein Lager für die Werkzeuge und einen darin verfahrbaren Greifer auf, der auf die Werkzeuge zugreifen kann. Die Vorrichtung 2 weist insbesondere zwei sich gegenüberliegende Wände 6 und 7 auf, an denen die Werkzeuge, insbesondere die Distanzstücke und die Schneidwerkzeuge, in hängender Weise angeordnet sind. Auf den oberen Abschlüssen der Wände 6 und 7 sind Fahrachsen angeordnet, auf denen eine Querstrebe 8 in horizontaler Richtung hin- und herbewegt werden kann. Ein Greifer 9 ist an der Querstrebe horizontal verfahrbar befestigt. Die Fahrachsen sind als hochpräzise Linearmodule mit Kugelschienenführungen und Zahnriemenantrieb ausgebildet. Der Greifer 9 kann vertikal mit Zahnstange und Ritzel verfahren werden. Die drei Fahrachsen werden durch bürstenlose hochdynamische AC-Servomotoren angetrieben, wobei der Servomotor für die vertikale Achse eine elektromagnetische Haltebremse aufweist. Außerdem ist der Greifer 9 drehbar an der Querstrebe 8 angeordnet, wobei die Drehachse durch einen AC-Servomotor mit Präzisions-Planetengetriebe angetrieben wird. Der Greifer 9 ist als Doppelgreifer ausgebildet, der an seinen beiden Greifenden 10 und 11 jeweils ein Werkzeug aufnehmen kann. Eine Ansicht eines Querschnitts durch ein Lager der erfindungsgemäßen Vorrichtung ist in Figur 2 dargestellt. An den sich gegenüberliegenden Wänden 6 und 7 sind in gleichmäßigen Abständen Dorne 22 angeordnet, die einen im Vergleich zu den Werkzeugen 17 kleinen Durchmesser aufweisen. Die Schnittansicht verläuft durch die Kontrollschleuse 21, die einen Teil der Wand 7 einnimmt und in deren Bereich Dorne 22 an beiden Seiten angeordnet sind. Die Kontrollschleuse 21 ist drehbar, so daß die dort angeordneten Schneidwerkzeuge 23 schnell getauscht werden können. Der als Doppelgreifer ausgebildete Greifer 9 mit seinen Greifenden 10 und 11 ist auf einer Querstrebe 8 horizontal verfahrbar, so daß die Greifenden 10 und 11 jeweils direkt vor den Werkzeugen 17 oder den Schneidwerkzeugen 23 angeordnet werden können.

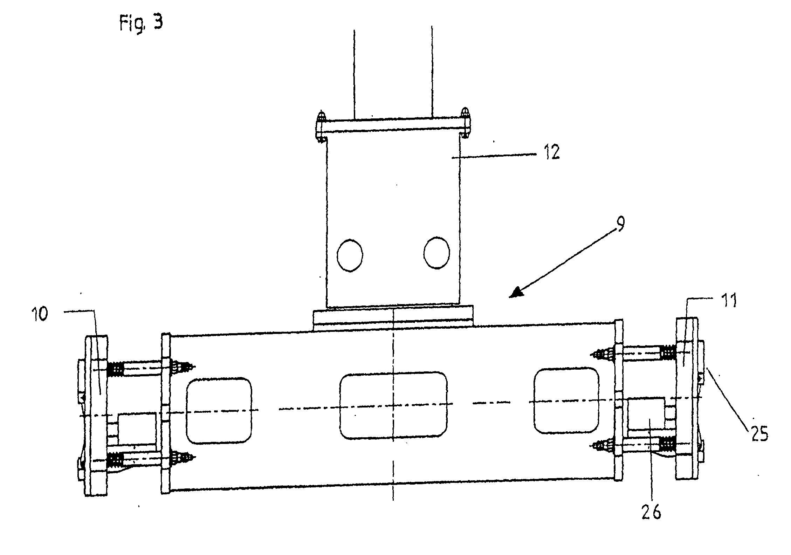

Der Greifer 9 ist in einer genaueren Ansicht in Figur 3 dargestellt.

In Figur 3 ist der Doppelgreifer mit seinen Greifenden 10 und 11 und mit dem Drehmodul 12 dargestellt, mit dessen Hilfe der Greifer 9 um seine Achse drehbar ist. An den Greifenden ist ein Vakuumsauger 25 vorgesehen, mit dessen Hilfe ein Werkzeug an dem Greifende gehalten werden kann. Weiterhin ist ein Sensor 26 im Bereich der Greifenden positioniert, der detekieren kann, wie groß der Abstand zum Werkstück ist und ob der Greifer noch weiter an das Werkstück angenähert werden muß. Der Sensor 26 ist auch in der Lage, die Stärke des erzeugten Vakuums zu detektieren.

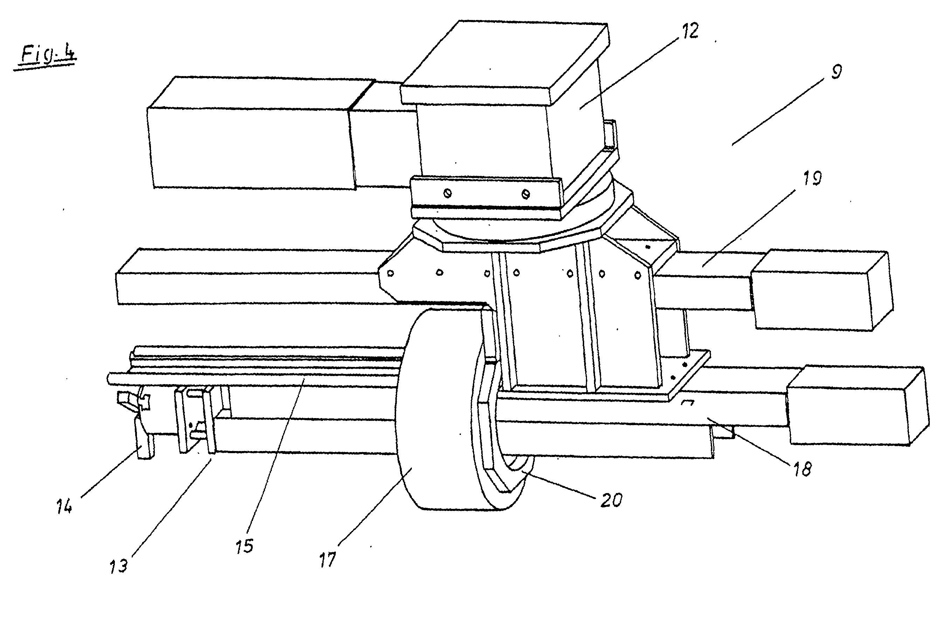

In Fig. 4 ist ein einzelner Greifer 9 dargestellt. Der Greifer 9 ist mit einem Drehmodul 12 an dem oben beschriebenen Portal, nämlich der Querstrebe 8, befestigt. Ein Innengreifer 13 mit pneumatisch spreizund entspreizbaren Fingern 14 ist linear verfahrbar, so daß der Innengreifer in das von einer Wand 6 oder 7 abzunehmende Werkzeug einfahren und dort die Finger 14 spreizen und damit das Werkzeug festklemmen kann. Oberhalb des Innengreifers 13 ist ein Pufferdorn 15 angeordnet, der eine halbrunde Form aufweist, so daß der Innengreifer mit dem Pufferdorn 15 direkt unter einen rund ausgebildeten Lagerdorn an einer der Seitenwände 6 oder 7 fahren kann und bei der Rückwärtsbewegung des Innengreifers 13 ein Werkzeug 17 auf den Pufferdorn 15 geschoben wird. Auf diesem Pufferdorn 15 kann ein oder können mehrere Werkzeuge abgelegt werden. Der Innengreifer 13 wird mit einer Linearführung 18 hin- und herbewegt und kann bis über das Ende des Pufferdorns 15 hinaus bewegt werden. Oberhalb des Innengreifers 13 ist ein mit Hilfe einer weiteren Linearführung beweglicher Abschieber 19 angeordnet, mit dessen Hilfe ein Ring 20 bewegt werden kann, der den Innengreifer 13 und den Pufferdorn 15 umgreift, um mit dessen Hilfe die auf dem Pufferdorn 15 abgelegten Werkzeuge 17 abgeschoben werden können. Beim Abschieben wird das Werkzeug 17 bis an den vorderen Rand des Pufferdorns 15 geschoben, bis der Innengreifer 13 mit seinen spreizbaren Fingern 14 das Werkzeug festklemmen und übergeben kann. Alternativ kann der Abschieber 19 die Werkzeuge 17 beispielsweise auch direkt auf ein Achsenelement schieben, wenn der Greifer 9 entsprechend positioniert ist.

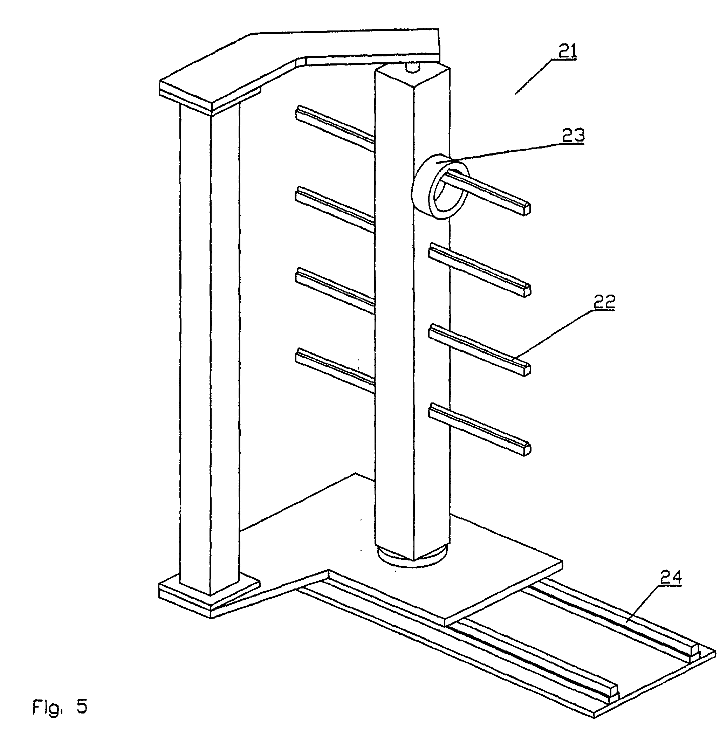

In der Figur 5 ist ein Ausschnitt der Wand 6 der Vorrichtung 2 zum Wechseln eines Werkzeugsatzes dargestellt, die eine besondere Kontrollschleuse 21 aufweist. In dieser Kontrollschleuse 21 sind an den Lagerdornen 22 Schneidwerkzeuge 23 hängend angeordnet. Die Kontrollschleuse 21 bildet eine Werkzeug-Kontrollund Ladestation, wobei die gesamte Kontrollschleuse 21 beweglich, genauer gesagt verschiebbar und drehbar ausgebildet ist. Die Kontrollschleuse 21 wird dabei auf einer Linearachse 24 mit Hilfe eines Zylinders nach hinten bewegt und kann dort um seine eigene Achse gedreht werden. Dadurch werden die auf der Rückseite der Kontrollschleuse 21 an Lagerdornen aufgehängten Werkzeuge nach vorn gedreht und können zurück in das Lager eingeführt werden. Die benutzten Werkzeuge, insbesondere Schneidwerkzeuge, können nun auf der Rückseite der Wand 6 einer optischen und einer Tastprüfung unterzogen werden und geschliffen oder ausgetauscht werden. Mit der Kontrollschleuse 21 werden insbesondere die Schneidwerkzeuge gehandhabt, es ist jedoch auch möglich, die Distanzstücke und andere Werkzeuge hier zur Kontrolle aus der Vorrichtung herauszuführen.

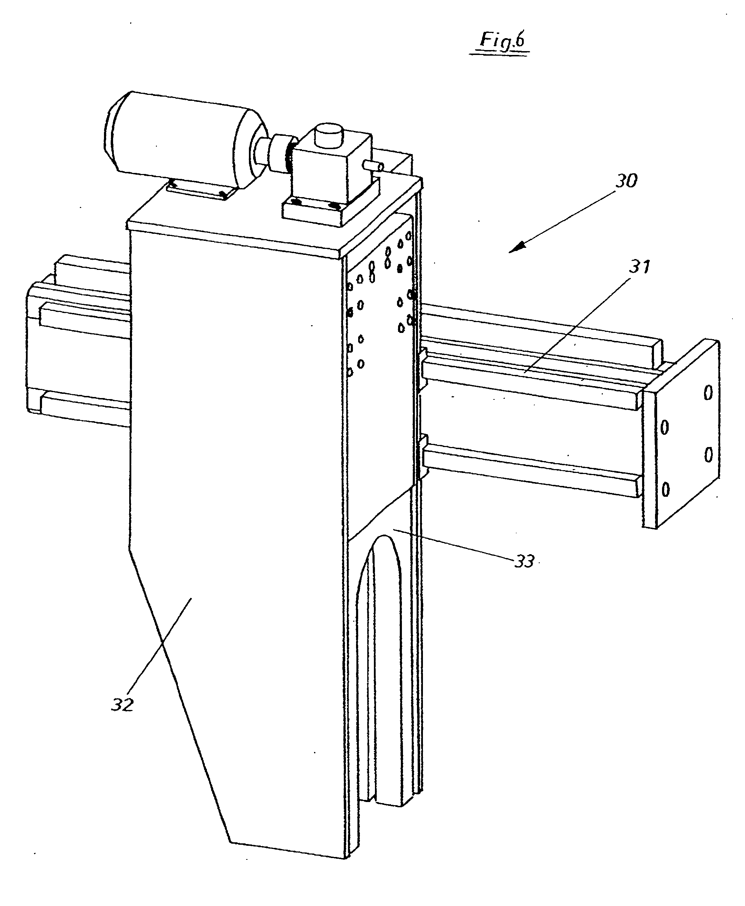

In Fig. 6 ist ein Kombipusher 30 dargestellt, der entlang einer Schiene 31 linear verfahrbar ist und über diese Schiene 31 sowohl das Drehkreuz 4 als auch die Welle 3 in der Spaltschere der Spaltanlage erreichen kann. Der Kombipusher 30 weist einen Rahmen 32 auf. Mit Hilfe eines Abschiebeschildes 33 können mit dem Kombipusher 30 die auf die Achsenelemente 4 des Drehkreuzes 5 aufgesetzten Werkzeuge weitergeschoben werden und es ist möglich, den gesamten Werkzeugsatz vom Drehkreuz 5 auf die Welle 3 der Spaltschere zu schieben. Nach erfolgtem Bearbeitungsgang kann der Kombipusher dann den benutzten Werkzeugsatz zurückschieben. Das Abschiebeschild 33 ist in der Höhe verfahrbar, so daß die Wellen 3 erreichbar sind.

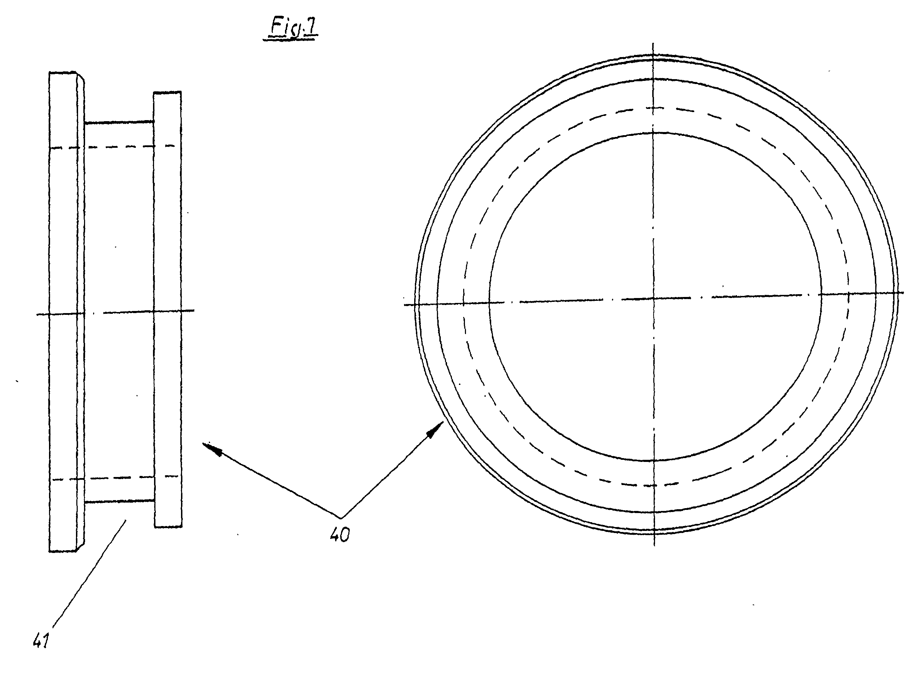

In Fig. 7 ist ein Endring 40 für ein Messerbaudrehkreuz in Seitenansicht und im Querschnitt dargestellt, wobei sich dieser Endring dadurch auszeichnet, daß er eine umlaufende Nut 41 aufweist, in die der Kombipusher 30 eingreifen und den Werkzeugsatz vom Drehkreuz abschieben kann.

Die erfindungsgemäße Vorrichtung arbeitet wie folgt: Nach dem Durchlaufen einer Stahlrolle wird zum Wechseln des Werkzeugsatzes das Programm gestoppt und nach entsprechender Befehlseingabe die Spaltschere um 90° zur Seite geöffnet, so daß das Drehkreuz 5 mit einem der Achsenelemente 4 an die Wellen der Spaltschere andocken kann. Mit Hilfe des Kombipushers 30 wird der gesamte Werkzeugsatz von den Wellen 3 der Spaltschere auf Achsenelemente 4 des Drehkreuzes 5 aufgeschoben, das sich beispielsweise um 90° dreht, so daß ein neuer, bereits aufgebauter Werkzeugsatz vor den jetzt freien Wellen 3 positioniert wird und mit Hilfe des Kombipushers 30 auf die Wellen der Spaltschere geschoben wird. Nach dem Wegfahren des Drehkreuzes 5 wird die Spaltschere geschlossen und die Spaltanlage 1 kann wieder in Betrieb genommen werden. Auf diese Weise wird erreicht, daß die Standzeit der Spaltanlage zum Werkzeugwechsel minimiert wird. Das Drehkreuz 5 dreht sich und verfährt so, daß die Achsenelemente 4 mit dem benutzten Werkzeugsatz der Vorrichtung 2 zum Wechseln des Werkzeugsatzes zugeführt wird und mit dem Greifer 9 der benutzte Werkzeugsatz abgebaut und ein neuer Satz für ein demnächst zu absolvierendes Spaltprogramm aufgebaut wird. Der in drei Achsen verfahrbare Greifer 9 kann die einzelnen Werkzeuge in dem platzsparend aufgebauten Lager an vorbestimmten Plätzen ablegen und programmgesteuert die für den neuen Werkzeugsatz benötigten Werkzeuge aufnehmen und auf die Achsenelemente 4 des Drehkreuzes 5 aufsetzen. Beim Abholen eines Werkzeugs von einem Lagerdorn 22 fährt der Greifer 9 in Richtung des Lagerdorns. Der Greifer 9 stoppt, wenn er in das Werkzeug eingefahren ist. Die Finger 14 des Greifers 9 spreizen sich und klemmen somit das Werkzeug fest. Der Abschieber 20 fährt eine Distanz, die der Dicke des aufgenommenen Werkzeuges entspricht, zurück, woraufhin auch der Innengreifer 13 mit dem eingeklemmten Werkzeug zurückfährt und die gesamten schon auf dem Pufferdorn 15 befindlichen Werkzeuge nach innen schiebt. Wenn der Innengreifer 15 die Ablageposition erreicht hat, werden die Greiferfinger 14 entspreizt und das Werkzeug auf dem Pufferdorn 15 abgelegt. Der Greifer 9 muß dabei nur in der Höhe und in der Tiefe des Lagers verfahrbar sein. In der Breite des Lagers reicht es aus, daß der Greifer 9 um seine eigene Achse drehbar ist, so daß der Innengreifer 13 in der Nähe der aufzunehmenden Werkzeuge positioniert werden kann. Den geringen fehlenden Abstand zwischen dem Greifer und dem Werkzeug wird vom Innengreifer 13 überbrückt, der verfahrbar ist.

Bei Verwendung eines Doppelgreifers wird mit jedem Greiferende zunächst ein Werkzeug aufgenommen. Bei Verwendung eines derartigen Doppelgreifers ist eine Verfahrbarkeit in allen drei Dimensionen notwendig, da der Doppelgreifer jeweils nur ein Werkzeug aufnimmt und hierfür kein verfahrbarer Innengreifer, sondern ein Vakuumsauger eingesetzt wird. Der Doppelgreifer fährt dann zu dem Achsenelement und gibt die beiden aufgenommenen Werkzeuge nacheinander ab, wobei der Pusher die bereits abgelegten Werkzeuge ein Stück auf die Achsenelemente 4 schiebt, so daß das vordere Ende des Achsenelementes so weit frei ist, daß zwei neue Werkzeuge aufgenommen werden können.

## Patentansprüche

1. Verfahren zum Wechseln eines Werkzeugsatzes bei einer Längsteilanlage, insbesondere einer Spaltanlage, bei dem der Werkzeugsatz von mindestens einer Welle (3) entfernt und ein vorbereiteter neuer Werkzeugsatz auf die Welle (3) aufgeschoben wird, wobei die einzelnen Werkzeuge, aus denen der Werkzeugsatz zusammengestellt wird, senkrecht gelagert werden und eine im wesentlichen waagerecht arbeitende Aufnahmeeinrichtung die senkrecht gelagerten Werkzeuge zu mindestens einem Achsenelement (4) transportiert,
**dadurch gekennzeichnet,**
**daß** die Aufnahmevorrichtung als Greifer (9) arbeitet, der auf die senkrecht gelagerten Werkzeuge zugreift und
**daß** der Greifer (9) aktiv auf die senkrecht gelagerten Werkzeuge zugreift,
**daß** der Greifer (9) mit einem Innengreifer (13) in das abzunehmende Werkzeug einfährt und dort zur Klemmung des Werkzeugs Finger (14) spreizt und
**daß** der Greifer (9) mit einem Vakuumsauger (25) ein Werkzeug an den Greifenden (10, 11) halten kann.

2. Verfahren nach Patentanspruch 1,
**dadurch gekennzeichnet,**
**daß** der Greifer (9) die senkrecht gelagerten Werkzeuge einzeln aufnimmt und einzeln auf das Achsenelement gibt.

3. Verfahren nach einem der vorhergehenden Patentansprüche,
**dadurch gekennzeichnet,**
**daß** die Werkzeuge matrixartig an zwei sich gegenüberliegenden Wänden (6, 7) gelagert werden.

4. Verfahren nach einem der vorhergehenden Patentansprüche,
**dadurch gekennzeichnet,**
**daß** die Schneidwerkzeuge in einem bestimmten Abschnitt (21) gelagert werden.

5. Verfahren nach Patentanspruch 4,
**dadurch gekennzeichnet,**
**daß** der Abschnitt (21), in dem die Schneidwerkzeuge gelagert werden, bewegt und einer Schneidwerkzeugkontrolle zugeführt werden.

6. Verfahren nach einem der vorhergehenden Patentansprüche,
**dadurch gekennzeichnet,**
**daß** der Greifer (9) mehrere Werkzeuge (17) zwischenlagert und diese gemeinsam auf ein Achsenelement (4) gibt.

7. Vorrichtung zum Wechseln eines Werkzeugsatzes, der auf einer Welle einer Längsteilanlage angeordnet ist, mit einem Lager zur senkrechten Lagerung der Werkzeuge und einer in dem Lager bewegbaren Aufnahmeeinrichtung zur Aufnahme und zum Transport der Werkzeuge,
**dadurch gekennzeichnet,**
**daß** die Aufnahmeeinrichtung als Greifer (9) ausgebildet ist, der zum horizontalen Zugriff und zur Weitergabe der Werkzeuge ausgelegt ist,
**daß** der Greifer (9) einen mechanischen Innengreifer (13) mit spreizbaren Fingern (14) aufweist und
**daß** der Greifer (9) einen Vakuumsauger (25) aufweist.

8. Vorrichtung nach Patentanspruch 7,
**dadurch gekennzeichnet,**
**daß** an den Wänden (6, 7) des Lagers Dorne (22) angeordnet sind.

9. Vorrichtung nach einem der Patentansprüche 7 oder 8,
**dadurch gekennzeichnet,**
**daß** eine Kontrollschleuse (21) zur Aufnahme der Schneidwerkzeuge vorgesehen ist.

10. Vorrichtung nach Patentanspruch 9,
**dadurch gekennzeichnet,**
**daß** die Kontrollschleuse (21), die zur Aufnahme der Schneidwerkzeuge bestimmt ist, verschiebbar und drehbar gelagert ist.

11. Vorrichtung nach einem der Patentansprüche 9 oder 10,
**dadurch gekennzeichnet,**
**daß** die Kontrollschleuse (21) an ihrer Vorder- und ihrer Rückseite Dorne (22) aufweist.

12. Vorrichtung nach einem der Patentansprüche 7 bis 11,
**dadurch gekennzeichnet,**
**daß** der Greifer (9) in drei Dimensionen verfahrbar und drehbar ist und daß der Greifer (9) hängend befestigt ist.

13. Vorrichtung nach einem der Patentansprüche 7 bis 12,
**dadurch gekennzeichnet,**
**daß** der Greifer (9) Vakuumsensoren (26) aufweist.

14. Vorrichtung nach einem der Patentansprüche 7 bis 13,
**dadurch gekennzeichnet,**
**daß** der Greifer (9) als Doppelgreifer ausgebildet ist.

15. Vorrichtung nach einem der Patentansprüche 7 bis 14,
**dadurch gekennzeichnet,**
**daß** der Greifer (9) einen ausfahrbaren Innengreifer (13) und einen Pusher oder Abschieber (20) aufweist.

16. Vorrichtung nach einem der Patentansprüche 7 bis 15,
**dadurch gekennzeichnet,**
**daß** die Vorrichtung einen verfahrbaren Kombipusher (30) aufweist, der die Werkzeuge auf dem Drehkreuz (5) und vom Drehkreuz auf die Welle (3) der Spaltanlage schieben kann.

## Claims

1. A method of changing a set of tools in a longitudinal separating unit, in particular a splitting unit, in which the set of tools is removed from at least one shaft (3) and a new prepared set of tools is pushed onto the shaft (3), wherein the individual tools from which the set of tools is assembled are stored vertically, and a receiving device which operates substantially horizontally conveys the vertically stored tools to at least one axle element (4), **characterized in that** the receiving device operates as a gripper (9) which engages on the vertically stored tools, and the gripper (9) engages in an active manner on the vertically stored tools, the gripper (9) enters - with an inner gripper (13) - the tool to be removed and there spreads its fingers (14) apart in order to clamp the tool, and the gripper (9) can hold a tool on the gripping ends (10, 11) with a vacuum suction means (25).

2. A method according to Claim 1, **characterized in that** the gripper (9) receives the vertically stored tools individually and delivers them individually to the axle element.

3. A method according to one of the preceding Claims, **characterized in that** the tools are stored in the manner of a matrix on two mutually opposite walls (6, 7).

4. A method according to one of the preceding Claims, **characterized in that** the cutting tools are stored in a specified portion (21).

5. A method according to Claim 4, **characterized in that** the portion (21) in which the cutting tools are stored is moved and supplied to a cutting-tool control means.

6. A method according to one of the preceding Claims, **characterized in that** the gripper (9) temporarily stores a plurality of tools (17) and delivers them jointly to an axle element (4).

7. A device for changing a set of tools which is arranged on a shaft of a longitudinal separating unit, with a store for storing the tools vertically and a receiving device movable in the store for receiving and for conveying the tools, **characterized in that** the receiving device is constructed as a gripper (9) which is designed for horizontal engagement and for passing on the tools, the gripper (9) comprises a mechanical inner gripper (13) with fingers (14) capable of being spread apart, and the gripper (9) comprises a vacuum suction means (25).

8. A device according to Claim 7, **characterized in that** mandrels (22) are arranged on the walls (6, 7) of the store.

9. A device according to one of Claims 7 or 8, **characterized in that** a control lock (21) for receiving the cutting tools is provided.

10. A device according to Claim 9, **characterized in that** the control lock (21), which is intended to receive the cutting tools, is mounted in a displaceable and rotatable manner.

11. A device according to one of Claims 9 or 10, **characterized in that** the control lock (21) has mandrels (22) at its front and rear sides.

12. A device according to one of Claims 7 to 11, **characterized in that** the gripper (9) is movable and rotatable in three dimensions, and the gripper (9) is fastened in a suspended manner.

13. A device according to one of Claims 7 to 12, **characterized in that** the gripper (9) has vacuum sensors (26).

14. A device according to one of Claims 7 to 13, **characterized in that** the gripper (9) is constructed in the form of a double gripper.

15. A device according to one of Claims 7 to 14, **characterized in that** the gripper (9) has an inner gripper (13), which can be moved out, and a pusher or transfer means (20).

16. A device according to one of Claims 7 to 15, **characterized in that** the device comprises a movable multiple-purpose pusher (30) which can push the tools on the turnstile (5) and from the turnstile onto the shaft (3) of the splitting unit.

## Revendications

1. Procédé pour le changement d'un bloc outil sur une coupeuse en longueur et plus particulièrement sur une refendeuse, consistant à retirer le bloc outil d'au moins un arbre (3) et à replacer un nouveau bloc outil déjà préparé, sur ce même arbre (3), où chaque outil composant le bloc outil est stocké verticalement et où les outils stockés sont transportés horizontalement sur un élément axial (4) par une unité de préhension mobile.
**caractérisé en ce que**
l'unité de préhension appelée grappin (9) fonctionne de manière active en prenant des outils stockés verticalement, **en ce que** le grappin (9) avec un grappin interne (13) avance sur l'outil à prendre et là écarte des doigts (14) pour le bloquer, et **en ce que** le grappin (9) peut tenir un outil à son extrémité (10,11) grâce à une aspiration à vide (25).

2. Procédé selon la revendication 1, **caractérisé en ce que** le grappin (9) prend des outils stockés verticalement un à un et les redonne un à un à l'élément axial.

3. Procédé selon l'une des revendications précédentes, **caractérisé en ce que** les outils sont stockés de manière matricielle sur deux parois (6,7) se faisant face.

4. Procédé selon l'une des revendications précédentes, **caractérisé en ce que** les outils de coupe sont stockés dans une partie définie (21).

5. Procédé selon la revendication 4, **caractérisé en ce que** la partie (21) où sont stockés les outils de coupe est mobile pour permettre le contrôle des outils.

6. Procédé selon l'une des revendications précédentes, **caractérisé en ce que** le grappin (9) peut collecter plusieurs outils (17) et les déposer ensemble sur un élément axial (4).

7. Installation pour le changement d'une cisaille se trouvant sur un arbre d'une coupeuse en longueur comprenant un magasin pour le stockage vertical des outils et une unité de préhension mobile dans le magasin pour la prise et le transport des outils, **caractérisée en ce que** l'unité de préhension appelée grappin (9) a pour fonction la prise horizontale et le transfert des outils, **en ce que** le grappin (9) comprend un grappin interne mécanique (13) avec des doigts écartables (14) et **en ce que** le grappin (9) comprend une aspiration à vide (25).

8. Installation selon la revendication 7, **caractérisée en ce que** des supports (22) sont installés sur les parois (6,7).

9. Installation selon l'une des revendications 7 et 8, **caractérisée en ce qu'**une porte de contrôle (21) est prévue pour le stockage des outils de coupe.

10. Installation selon la revendication 9, **caractérisée en ce que** la porte de contrôle (21), qui est destinée au stockage des outils de coupe, est mobile et pivotante.

11. Installation selon l'une des revendications 9 ou 10, **caractérisée en ce que** la porte de contrôle (21) comprend des supports (22) sur ses deux faces.

12. Installation selon l'une des revendications 7 à 11, **caractérisée en ce que** le grappin (9) est mobile et peut pivoter dans trois dimensions, et **en ce que** le grappin (9) est fixé en suspension.

13. Installation selon l'une des revendications 7 à 12, **caractérisée en ce que** le grappin (9) présente un capteur (26) pour l'aspiration.

14. Installation selon l'une des revendications 7 à 13, **caractérisée en ce que** le grappin (9) est conçu comme un doublé grappin.

15. Installation selon l'une des revendications 7 à 14, **caractérisée en ce que** le grappin (9) est muni d'un grappin interne (13) extensible et d'un pousseur (22).

16. Installation selon l'une des revendications 7 à 15, **caractérisée en ce qu'**elle est munie d'un pousseur combiné (30) qui peut pousser les outils sur le tourniquet (5) et du tourniquet sur les arbres de la refendeuse.
